(19) Europäisches Patentamt

European Patent Office

Office européen des brevets

(11) **EP 4 703 028 A1**

(12) **EUROPEAN PATENT APPLICATION**

(43) Date of publication:
**04.03.2026 Bulletin 2026/10**

(21) Application number: **24197267.8**

(22) Date of filing: **29.08.2024**

(51) International Patent Classification (IPC):
***B01D 67/00*** (2006.01)     ***B01D 71/14*** (2006.01)

(52) Cooperative Patent Classification (CPC):
**B01D 71/14; B01D 67/00931;** B01D 2323/04;
B01D 2323/30; B01D 2325/38

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Sartorius Stedim Biotech GmbH
37079 Göttingen (DE)**

(72) Inventors:
• **Metze, Michael
  37085 Göttingen (DE)**
• **Tran, Cong Duc
  37136 Waake (DE)**
• **Orth, Kirsten
  37077 Göttingen (DE)**

(74) Representative: **Müller-Boré & Partner
Patentanwälte PartG mbB
Friedenheimer Brücke 21
80639 München (DE)**

(54) **HYDROPHOBIC MEMBRANES BASED ON POLYSACCHARIDES**

(57)    The present invention relates to a membrane, in particular an air filter membrane, as well as a method for producing a respective membrane.

**EP 4 703 028 A1**

**Description**

The present invention relates to a membrane, in particular an air filter membrane, as well as a method for producing a respective membrane.

Membranes can be provided with various properties depending on the intended application. For example, hydrophobic membranes can be applied where aeration of a system is necessary and at the same time, depending on the pore size, contamination of the system by particles, bacteria, viruses, pollen, etc. must be prevented. The membrane filters serve as a hydrophobic barrier, which is necessary for the protection against moisture of electronic devices or for the ventilation of medical bags (e.g. infusions) or bioreactors. The hydrophobic property prevents the filter from wetting with water and, thus, the aeration property is maintained under all conditions. Another advantage of the hydrophobic properties is that nucleation and growth of microorganisms on and in the membrane is inhibited.

The membranes currently applied for this application are made of polyfluorinated materials, such as polytetrafluoroethylene (PTFE), which is a frequently used polymer. In addition, membranes chemically modified with polyfluorinated alkyl acids (PFAA) are also available. A significant disadvantage of this fluorine technology are the toxic and environmentally hazardous properties and conditions of the raw materials and of the manufacturing processes. Furthermore, polyfluorinated chemicals are only degradable under extreme conditions and therefore remain in the environment as highly persistent chemicals. For this reason, these compounds are also called "Ever-Chemicals" and the European Chemicals Agency (ECHA) plans to ban the majority of these chemicals from the European market.

Thus, the technical problem underlying the present invention is to provide an alternative to polyfluorinated hydrophobic substances in membrane technology.

The solution to the above technical problem is achieved by the embodiments characterized in the claims.

In particular, the present invention relates to a method for producing a membrane, comprising the steps of:

(a) providing a membrane comprising a crosslinked polysaccharide polymer, and
(b) reacting hydroxyl groups of the polysaccharide polymer of the membrane with a carboxylic acid having 6 to 30 carbon atoms or a derivative thereof.

The present invention is preferably able to provide a sustainable hydrophobic membrane. The substances for both, the chemical modification of the membrane as well as the basic structure, preferably meet the requirements of sustainability.

In accordance with the present invention, the production method comprises the step (a) of providing a membrane comprising a crosslinked polysaccharide polymer. Suitable methods for providing membranes are known in the art. For example, a respective membrane can be prepared as described in "Basic Principles of Membrane Technology" 2nd Ed., Marcel Mulder, pp. 89 ff. Preferably, the membrane has been prepared by precipitation casting, more preferably by single polymer layer precipitation casting. The polymer layer is preferably a single layer.

The polysaccharide polymer contained in the membrane is not subject to any special restrictions. Use may therefore be made of any one or more polysaccharide polymers suitable for membrane formation. The polysaccharide polymer can for example be selected from the group consisting of cellulose, agarose, starch as well as a mixture of at least two of said polysaccharide polymers. Preferably, the polysaccharide polymer is crosslinked cellulose. By using the crosslinked polymer, significantly higher yield and improved hydrophobization can preferably be achieved. Moreover, a change in thickness/dimension of the membrane can preferably also be avoided or minimized.

In the case of a crosslinked cellulose membrane, the step (a) may comprise the steps of (a1) providing a membrane comprising a cellulose ester, (a2) saponifying the cellulose ester membrane to provide a regenerated cellulose membrane, and (a3) crosslinking the regenerated cellulose membrane (to provide the membrane comprising the crosslinked polysaccharide polymer). Examples of suitable cellulosic esters are cellulose acetate, such as cellulose monoacetate, cellulose diacetate, cellulose triacetate, cellulose acetate butyrate or a mixture thereof. Suitable saponification and crosslinking methods are known in the art. For example, saponification can be achieved by treatment with potassium hydroxide (e.g. 50% KOH). Preferably, the membrane is not swollen after saponification, as e.g. described in WO 2018/141437 A1. Crosslinking processes are, for example, a crosslinking of regenerated cellulose according to the process as described, for example, in US 7 422 686 B2 or in WO 2018/141437 A1. The crosslinking degree may for example be from 0.04 to 0.10 and may be determined as disclosed in WO 2018/141437 A1. The above is not limited to crosslinked cellulose but also applies to the other crosslinked polysaccharide polymers. For example, the step (a) may comprise the steps of (a1) providing a membrane comprising a polysaccharide ester, (a2) saponifying the polysaccharide ester membrane to provide a regenerated polysaccharide membrane, and (a3) crosslinking the regenerated polysaccharide membrane (to provide the membrane comprising the crosslinked polysaccharide polymer).

The membrane (provided in step (a)) may comprise a support layer (supported membrane). The polysaccharide polymer can be present on and/or partially or completely in and around the support layer. For example, the polysaccharide polymer layer may be present in the support layer to an extent of at least 25 Vol-%, preferably at least 50 Vol-%, more preferably at least 75 Vol-%. Preferably, the polymer layer penetrates the support layer to an extent of less than 100 Vol-%.

The support layer is not particularly limited. It is possible, therefore, to use all support layers known to the skilled person from the prior art. For example, the support layer may be a nonwoven web, a woven fabric or an open microfilter membrane. Examples of nonwoven webs are polyolefin nonwovens, such as, for example, PP/PE core-shell nonwovens, viscose nonwovens, and polyester nonwovens, such as, for example, PET nonwovens and cellulose acetate nonwovens. The support layer is preferably a viscose nonwoven, a PP/PE nonwoven, or a PET nonwoven.

The thickness of the support layer, when present, may be, for example, 10 to 250 $\mu$m, preferably 30 to 100 $\mu$m, most preferably 40 to 70 $\mu$m.

The thickness of the polysaccharide polymer layer may be 50 to 300 $\mu$m, preferably 100 to 200 $\mu$m, most preferably 130 to 180 $\mu$m, including the part optionally present in the support layer.

The total thickness of the membrane is not particularly limited. For example, the membrane has a total thickness of 50 to 300 $\mu$m, preferably 100 to 200 $\mu$m, most preferably 130 to 180 $\mu$m.

The mean (nominal) pore size of the polysaccharide polymer layer (after step (b)) may be 0.1 to 10 $\mu$m, preferably 0.1 to 8.0 $\mu$m, most preferably 0.1 to 5.0 $\mu$m.

For pore sizes of at least 0.1 $\mu$m, i.e. for microfiltration membranes with an average pore size of 0.1 to 10 $\mu$m, capillary flow porometry is used to determine the pore size. This is a gas/liquid porosimetry in which the differential gas pressures and flow rates through a membrane sample are measured first in the wet and then in the dry state. Prior to measurement, the membrane sample is brought into contact with a wetting liquid in such a way that all pores are filled with this liquid. After the pores have been filled and the sample has been introduced, the measuring cell must be closed and the measurement started. After starting the measurement, the gas pressure is automatically and gradually increased and the pore diameters corresponding to the applied pressure are emptied by the gas pressure. This is continued until the relevant pore range has been covered, i.e. until even the smallest pores present in the measuring range have been freed of liquid. The pressure is then reduced again and the measurement is repeated automatically on the now dry sample. The pore size distribution is calculated from the difference between the two pressure-flow rate curves using the Young-Laplace equation (see also A. Shrestha, "Characterization of porous membranes via porometry", 2012, Mechanical Engineering Graduate Theses & Dissertations, Paper 38, University of Colorado at Boulder).

For the determination of pore sizes larger than 10 $\mu$m and up to 1 mm, the image analysis based method described in Journal of Membrane Science 372 (2011), pages 66 to 74, can be used.

For pore sizes less than 0.1 $\mu$m, cut-offs are determined by filtering model substances and generating sieve curves indicating cut-off behavior of the membranes over a range of molecular weights (cf. ASTM E1343-90).

In accordance with the present invention, the production method further comprises the step (b) of reacting hydroxyl groups of the polysaccharide polymer of the membrane with a carboxylic acid having 6 to 30 carbon atoms or a derivative thereof. By the respective esterification, it is preferably possible to provide hydrophobic properties to the treated membrane. The step (b) can for example be carried out by immersing the membrane provided in step (a) in a reaction mixture containing the carboxylic acid or its derivative and any further optional components. For example, the membrane provided in step (a) is introduced into a vessel optionally together with a solvent. The carboxylic acid or its derivative, an optional esterification catalyst, and a base are consecutively added. After heating at reflux conditions for a suitable amount of time, the reaction can be quenched, e.g. by the addition of water, and the membrane can be washed with various solvents.

The carboxylic acid has 6 to 30 carbon atoms (in the main chain). Preferably, the carboxylic acid has (in the main chain) 15 to 26 carbon atoms, more preferably 17 to 24 carbon atoms, more preferably 18 to 20 carbon atoms, most preferably 18 carbon atoms.

The carboxylic acid may be substituted or unsubstituted. For example, the potential substituents may be selected from the group consisting of a branched or linear alkyl group having 1 to 6 carbon atoms, a cycloalkyl group having 4 to 8 carbon atoms, a branched or linear alkenyl group having 2 to 6 carbon atoms, a cycloalkenyl group having 4 to 8 carbon atoms, a branched or linear alkynyl group having 2 to 6 carbon atoms, an aryl group having 1 to 3 aromatic rings, and a heteroaryl group having 1 to 3 aromatic rings including heteroatoms. Moreover, one or more tetravalent carbon atoms (together with the hydrogen atoms bonded thereto) of the carboxylic acid, when present, may each independently be substituted by O or S, preferably O. Most preferably, the carboxylic acid is unsubstituted.

The carboxylic acid may be branched or linear. Preferably, the carboxylic acid is linear.

The carboxylic acid may possess one or more unsaturated bonds. In case of more than one unsaturated bond, the multiple unsaturated bonds may be conjugated or unconjugated. The unsaturated bonds may independently have cis- and/or *trans*-configuration. Preferably, the unsaturated bonds have trans-configuration. Preferably, the carboxylic acid has at most one unsaturated bond. Most preferably, the carboxylic acid is saturated.

Examples of carboxylic acid include all carboxylic acids from hexanoic acid to triacontanoic acid. Preferably, the carboxylic acid is selected from the group consisting of stearic acid, capric acid, caproic acid, enanthic acid, caprylic acid, pelargonic acid, undecylic acid, lauric acid, tridecyclic acid, myristic acid, pentadecylic acid, palmitic acid, margaric acid, nonadecylic acid, arachidic acid, or a mixture thereof. Most preferably, the carboxylic acid is stearic acid.

As carboxylic acid derivative there may be applied commonly known carboxylic acid derivatives known in the art. For example, the carboxylic acid derivative may be selected from a carboxylic acid halide, such as a carboxylic acid chloride, a carboxylic acid anhydride, a carboxylic acid thioester, an N-acyl imidazole, or an acyl phosphate. Preferably, the carboxylic acid derivative is a carboxylic acid anhydride or a carboxylic acid chloride, such as stearic acid chloride.

The reaction step (b) can be carried out in the presence of a solvent. The applied solvent is not particularly limited. For example, the solvent may be selected from one or more of DMSO, butyl acetate, *N,N'*-dimethylformamide, *N*-methylpyrrolidinone, dichloromethane, acetone, acetonitrile, anisole, ethyl acetate, ethyl propionate, ethyl butyrate, propyl acetate, propyl propionate, propyl butyrate, diethyl ether, dioxane, nitromethane, tetrahydrofuran, triethylamine, *N,N*-diisopropylethylamine, dihydrolevoglucosenone (cyrene), and pyridine. Preferably, the solvent is selected from one or more of diethyl ether, dichloromethane, dioxane, pyridine, anisole, and dihydrolevoglucosenone (cyrene).

The concentration of the carboxylic acid or its derivative in the reaction mixture is not particularly limited. Preferably, the concentration of the carboxylic acid or its derivative is 8.0 mM to 0.60 M, more preferably 15 mM to 0.15 M, most preferably 30 mM to 0.10 M.

Preferably, reaction step (b) is carried out in the presence of a base. Non-nucleophilic (sterically hindered) bases commonly known in the art may be used. For example, the base may be selected from pyridine, triethylamine, lithium diisopropylamide (LDA), sodium hydride, potassium hydride, sodium tert-butoxide, potassium tert-butoxide, lithium tetramethylpiperidide (LiTMP), sodium bis(trimethylsilyl)amide (NaHMDS), and potassium bis(trimethylsilyl)amide (KHMDS). Preferably, the base is selected from pyridine and triethylamine. More preferably, the base is pyridine. The base may also be used as the or part of the solvent.

The concentration of the base in the reaction mixture is not particularly limited. Preferably, the concentration of the base is 60 mM to 12.5 M, more preferably 0.10 M to 12.5 M, most preferably 1.0 M to 12.5 M. The base may also be used in (large) excess, when compared to the carboxylic acid or its derivative.

The reaction step (b) can be carried out in the presence of an esterification catalyst. As the esterification catalyst, there may be used any esterification catalyst known in the art. For example, the esterification catalyst may be selected from 4-dimethylaminopyridine (4-DMAP), N-methylimidazole, 1,8-diazabicyclo[5.4.0]undec-7-ene (DBU), 1,5-diazabicyclo[4.3.0]non-5-ene (DBN), and N,N-dimethylbenzylamine. Preferably, the esterification catalyst is 4-DMAP.

The concentration of the esterification catalyst in the reaction mixture may be 1.0 mM to 4.0 mM, preferably 1.5 mM to 3.0 mM, most preferably 2.0 mM to 2.5 mM.

The temperature during reaction step (b) is not particularly limited. Preferably, the reaction step (b) is carried out at reflux conditions, e.g. of the respective solvent, when used. For example, the temperature may be at least 30°C, preferably at least 40°C, and more preferably at least 45°C. The upper limit of the temperature is not particularly limited but may depend on the reactants and solvents used. For example, the upper limit of the temperature may be 200°C, preferably 150°C, and more preferably 120°C.

Furthermore, the duration of reaction step (b) is not particularly limited. For example, the duration may be 10 min to 72 h, preferably 10 min to 24 h, more preferably 10 min to 8.0 h, and most preferably 10 min to 3.0 h.

The temperature and reaction time can be used to influence the conversion ratio of the membrane. The conversion ratio can influence the dimensional change (change in thickness) and the hydrophobicity values (water contact angle, water penetration pressure). If the parameters are set too low, no reaction takes place or the product membrane is not sufficiently hydrophobic. If the parameters are set too high, yellowing, decomposition, or extreme dimensional changes/swelling (increase in thickness, reduction in flow) of the membrane may occur.

The reaction step (b) may be carried out in the presence of air or in the presence of an inert and/or dry atmosphere. Preferably, the reaction step (b) is carried out in the presence of an inert and/or dry atmosphere. For example, the reaction step (b) can be carried out under nitrogen atmosphere or argon atmosphere, preferably under nitrogen atmosphere.

After the reaction step (b), an esterification degree with the carboxylic acid group may be 0.17% to 70%, preferably 1.0 to 30%, more preferably 2.0 to 10%, in terms of 18.5 mmol -OH/1 g polysaccharide membrane (dry mass). The esterification degree (or conversion) in % refers to the proportion of -OH groups in the modified polysaccharide that have been esterified. It is calculated from the amount of carboxylic acid molecules incorporated, divided by the number of -OH groups in the starting material * 100. The amount of carboxylic acid incorporated is determined gravimetrically using a dry balance and is e.g. determined in the case of applying stearic acid chloride as follows: (dry mass (product)-dry mass (educt))/(M(stearic acid chloride)-M(HCl)). The number of -OH groups in the educt is also determined gravimetrically by calculating: 3*dry mass(educt)/M(glucose unit). Esterification is preferably homogenous within the membrane.

After the reaction step (b), the production method may comprise further steps, such as a washing step.

After reaction step (b), the membrane preferably does not contain polyfluorinated polymers. Preferably, the membrane and the production method are each sustainable/bio-based.

The method of the present invention can also be applied to other substrates than membranes, such as textiles and non-wovens. After treatment, the respective surfaces are preferably not wettable (with water). Hapticity is preferably not significantly altered.

A further aspect of the present invention relates to a membrane obtained by the production method of the present invention. The above definitions and embodiments apply analogously for this aspect of the present invention. The following definitions and embodiments apply likewise analogously for the method of the invention.

The membrane of the present invention comprises a crosslinked polysaccharide polymer, wherein the polysaccharide polymer is esterified with a carboxylic acid group. The carboxylic acid group (-C(O)R) is obtained from the carboxylic acid or the derivative thereof, which binds to hydroxyl groups of the crosslinked polysaccharide polymer.

Preferably, at least one membrane surface is hydrophobic. The at least one membrane surface may have a water contact angle of 90° or more and 180° or less as determined in accordance with the sessile drop method. The sessile drop method is a technique used to measure the contact angle of a liquid droplet on a solid surface. For this purpose, a small droplet of water is placed onto the membrane surface and the shape and angle of the droplet are observed. A static measurement is applied, where the cannula does not maintain in the droplet while measuring. This method can be time-sensitive and, therefore, it is waited for about 30 s after applying the droplet before measuring the contact angle.

The contact angle is the angle formed between the tangent to the droplet's surface and the solid surface.

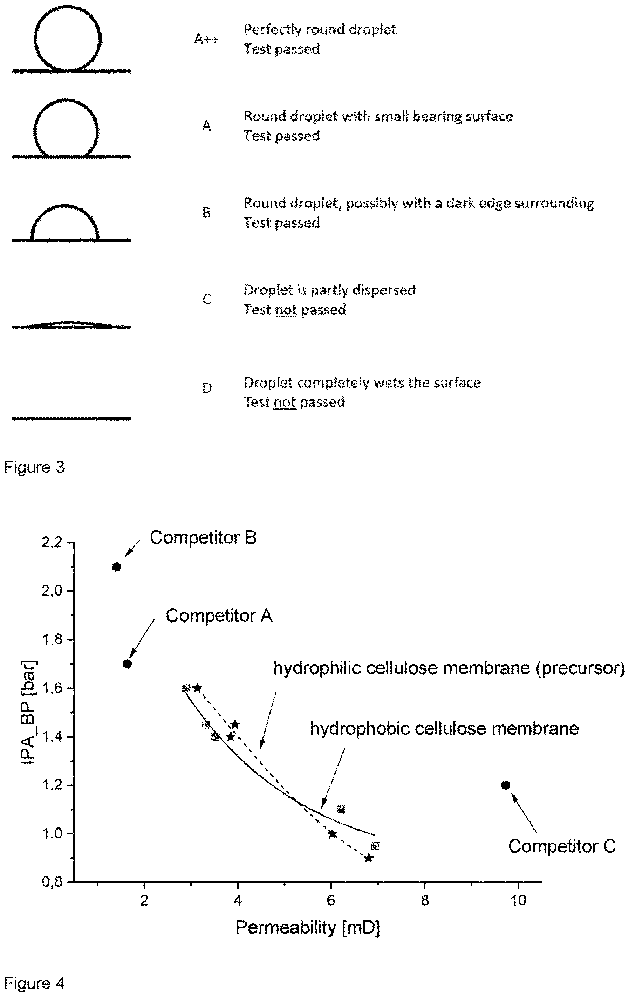

The membrane of the present invention may have a surface free energy of at most 65 mN/m. The surface free energy is preferably 20 to 60 mN/m, and most preferably 40 to 50 mN/m. Measuring the surface free energy of solids involves methods that assess the interactions between the solid surface and a liquid. Thereby, the contact angle method can be applied, where a drop of liquid is placed on the solid surface, and the angle formed between the solid surface and the tangent to the drop at the point of contact is measured. The contact angle is directly related to the surface free energy of the solid. Droplets of different solvents with known surface energy, all of the same size, are applied to the membrane surface. The droplets' forms are observed and compared to a reference graphic, such as further explained with respect to Fig. 3 below. The surface free energy of the solid then falls within the range defined by the solvent with the lowest value in the case of a passed test and the highest value among all solvents that resulted in a failed test. Surface tension is a property of liquids, while surface energy is typically used when referring to solids. However, they are essentially the same (numerically the same).

The membrane of the present invention may have a water intrusion pressure of more than 2.0 bar. The water intrusion pressure is preferably at least 2.2 bar, and most preferably at least 2.5 bar. Although not specifically limited, the upper limit of the water intrusion pressure may be 6.0 bar. For determining the water intrusion pressure, the following method can be applied. The membrane is placed on a grid in a sealable tube with a pressure gauge on the top. A sealing ring is used to ensure that all flow passes from top to bottom through the membrane. Subsequently, water is applied to the membrane, and pressure is applied. This pressure steadily increases until the water surpasses the membrane. The pressure at which the membrane is surpassed is recorded as the water intrusion pressure.

The membrane of the present invention may have a bubble point of 0.30 to 2.6 bar. Preferably, the membrane has a bubble point of 0.30 to 2.55 bar, more preferably 0.50 to 2.0 bar, and most preferably 1.0 to 1.75 bar. For determining the bubble point the following method can be applied. For preparation, the pores of the membrane are filled with a solvent by placing the membrane in the solvent until completely wetted. Subsequently, the specimens are placed on a fine grid, which is clamped in a tube to which pressure is applied. The flow direction is from top to bottom, requiring the air to penetrate the membrane to exit the apparatus. At the lower end of the apparatus, there is a tube immersed in solvent, which makes escaping air bubbles clearly visible. The applied pressure is continuously increased until an air bubble penetrates the membrane and exits the apparatus through the tube. The pressure applied at this point is recorded as the measurement value. Commonly used solvents include water, isopropanol (IPA), and mixtures thereof.

The membrane of the present invention may have a permeability of at least 0.10 mD. Preferably, the membrane has a permeability of at least 1.0 mD, more preferably at least 2.0 mD, and most preferably at least 2.5 mD. Although not specifically limited, the upper limit of the permeability may be 24 mD. The permeability is determined by the following formula:

$$P[mD] = \left( v \left[ \frac{cm^3}{cm^2 \cdot s} \right] * \mu[cP] * \frac{\Delta x[cm]}{\Delta p[atm]} \right) * 1000$$

wherein P represents permeability, v represents area-related flow, $\mu$ represents viscosity, $\Delta x$ represents thickness of the layer through which the flow passes, and $\Delta p$ represents pressure difference (see Darcy laws). The flow rate and the thickness are determined as described herein. For the viscosity $\mu$ (of the liquid used for determining the flow rate, e.g. water or isopropanol) there can be taken respective values from the literature, such as F.-M. Pang et al., Journal of Molecular Liquids, Vol. 136, Issues 1-2, pp. 71-78 (e.g. viscosity $\mu$ of i-PrOH at 25.15 °C = 2.070 mPa*s = 2.070 cP). The pressure difference $\Delta p$ may be 1 bar.

The membrane of the present invention may have a flow rate of 10 to 200 s/100 mL @1 bar, 12.5 cm². Preferably, the membrane has a flow rate of 13 to 130 s/100 mL @1 bar, 12.5 cm², more preferably 20 to 100 s/100 mL @1 bar, 12.5 cm², and most preferably 22 to 85 s/100 mL @1 bar, 12.5 cm². For determining the flow rate, the following method can be applied. For preparation, the pores of the membrane are filled with a solvent by placing the membrane in the solvent until completely wetted. Subsequently, the specimens are placed on a fine grid, which is clamped in a tube to which around 110 mL of solvent is filled and a pressure of 1 bar is applied. The flow direction is from top to bottom, requiring the solvent to penetrate the membrane to exit the apparatus. At the lower end of the apparatus, there is an outlet directed at a graduated cylinder. The time from the first droplet of solvent falling into the cylinder until the solvent level reaches 100 mL is measured. The commonly used solvent is isopropanol (IPA).

The membrane of the present invention may have an air flow rate of 0.2 to 3.0 L/(m²·s) @ 200 Pa. Preferably, the membrane has an air flow rate of 0.5 to 2.0 L/(m²·s) @ 200 Pa, more preferably 0.75 to 1.5 L/(m²·s) @ 200 Pa.

The membrane may have a symmetric or asymmetric structure. For example, a symmetric structure may be applied when focusing on secured bacterial retention with simultaneous lower flow at the same time. An asymmetric structure may be applied when focusing on higher flow. Preferably, the membrane has a symmetric structure.

The membrane can be used for various applications. For example, the membrane can be an air filter membrane, e.g. to prevent contamination of electronic devices and biopharmaceutical/medical bags, or a membrane in sterile connectors (such as opta connectors) for the assembly of components on bioreactors. Additional applications of the membrane include serving as water-repellent filters for vents in all water-sensitive systems. The membranes can also function as air filters to detect and monitor airborne contaminants, protect vacuum pumps from water aspiration and be used to separate oil and water mixtures. Furthermore, gas separation, membrane gas adsorption and membrane distillation represent other coherent uses.

A further aspect of the present invention relates to the use of the membrane of the present invention or of the membrane obtained by the production method of the present invention for filtering a fluid medium. The above definitions and embodiments apply analogously for this aspect of the present invention. The following definitions and embodiments apply likewise analogously for the method and the membrane of the present invention.

Examples of the fluid medium include air, solvents, such as organic solvents, mixed solvents (organic and/or inorganic solvents), and various solutions, chemical intermediates, and bio-products. Preferably, the fluid medium is an organic solvent or air.

Fig. 1:    Unmodified cellulose (a: water drop test; b: REM image).

Fig. 2:    Cellulose modified with carboxylic acid (a: water drop test; b: REM image).

Fig. 3:    Reference for evaluating interaction of liquid droplets with surface under consideration.

Fig. 4:    Bubble point (IPA) vs. permeability of different membranes. Competitor A = Sumitomo (FP-022-60), Competitor B = Gore (SM0-00002), Competitor C = Sartorius Sartopore Air (15C77). All membranes have been evaluated by the same apparatuses and methods as described herein (i.e. the values for the competitor membranes may, therefore, differ from the manufacturer's data given in Table 2 below).

The present invention will be further illustrated in the following examples without being limited thereto.

General modification example

Prior to the reaction, a starting cellulose membrane is stored inside a reaction vessel under high vacuum to remove any residual moisture. Optionally, the reaction vessel can be heated to accelerate the drying process. The solvent is added until the membrane is completely submerged. Under a constant flow of inert gas and vigorous stirring, the carboxylic acid (derivative) and optionally a catalyst are added. After slow addition of a base, the reaction mixture is heated to reflux and stirred for 10 min - 3 hours (depending on the other reaction parameters). To stop the reaction, the reaction mixture is cooled to room temperature, the samples are transferred to a bath containing EtOH:H₂O (90:10) and stirred vigorously for 1 minute. In the following step, the membrane is washed with the selected solvent for the reaction. Finally, the membrane is either air dried or oven dried to obtain a hydrophobic cellulose-based membrane.

Example 1: Production of a membrane of the present invention

Concrete modification example (for a small batch)

Prior to the reaction, the starting membrane samples (regenerated cellulose, crosslinked, 4 disks ø=50 mm, 0.56 g) are stored inside the reaction vessel under high vacuum for 16 hours to remove any residual moisture. Optionally, the reaction vessel can be heated to accelerate the drying process. The solvent (1,4-dioxane) is added until the membrane samples are completely submerged. Under a constant flow of inert gas (N₂) and vigorous stirring, the hydrophobizing reagent (stearic acid chloride, 3.3 g) and optionally a catalyst (4-DMAP, 0.04 g) are added. After slow addition of the base (pyridine, 1.01 mL), the reaction mixture is heated to reflux (>101.1 °C) and stirred for 3 hours. To stop the reaction, the reaction mixture is cooled to room temperature, the membrane samples are transferred to a bath containing EtOH:$H_2O$ (90:10) and stirred vigorously for 1 minute. Finally, the samples were washed with 1,4 dioxane and either air dried or oven dried to obtain the desired hydrophobic cellulose-based membranes.

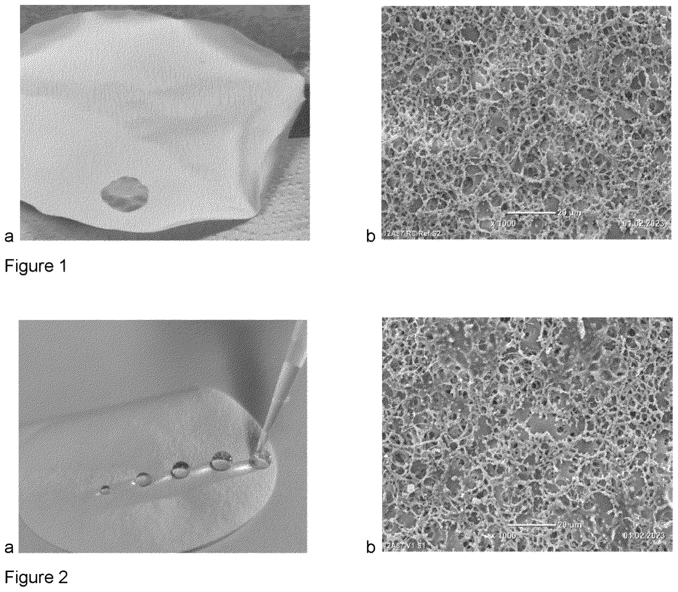

The properties of the membrane of Example 1 have been evaluated. Figures 1 and 2 show a comparison of the untreated cellulose of Example 1 with the treated cellulose having stearic ester groups of Example 1. It is evident that hydrophobic properties have been introduced without altering the membrane structure. The method of the present invention preferably allows the hydrophobization of crosslinked polysaccharide-based polymers, regardless of their other properties and structures. The polymer structure, filter properties or function are preferably not affected during the process. This creates the potential for the production of countless hydrophobic polysaccharide-based polymers with unique properties.

Furthermore, the surface free energy of the membrane of Example 1 has been evaluated by applying the above-mentioned method and applying the reference shown in Figure 3.

As can be derived from Table 1 below, the surface free energy of the membrane of Example 1 lies in the range of 44 to 48 mN/m.

Table 1

| Solvent | Surface tension [mN/m] | Evaluation result [A++ - D] |
|---|---|---|
| Water | 72.1 | A |
| Glycerol | 62.7 | B |
| Ethylene glycol | 48.0 | B |
| DMSO | 44.0 | D |
| Benzyl alcohol | 39.0 | D |
| DMF | 37.3 | D |
| 1-Decanol | 28.5 | D |

Example 2: Evaluation of the properties of the membrane of Example 1 in comparison to non-crosslinked analogues and prior art membranes

As shown in the following Table 2 and in Figure 4, the membrane of Example 1 with cellulose acid stearic ester has properties comparable to a conventional PTFE membrane. The data suggests that membranes made from cellulose stearic acid esters exhibit comparable hydrophobicity than PTFE membranes. Furthermore, by adjusting the pore size and other properties of the starting membrane, the hydrophobic membrane can be adopted for respective applications. In the non-crosslinked analogues, permeability decreases after hydrophobization, while the crosslinked membranes of the present invention substantially maintain the respective permeability after hydrophobization.

Table 2

| Manufacturer | Product name | nominal pore size [μm] | Material | Thickness [μm] | IPA flow rate[1] | Water intrusion pressure [bar] | Water contact angle [°] | Bubble point IPA [bar] | Air Flow Rate[2] | Permeability [mD] |
|---|---|---|---|---|---|---|---|---|---|---|
| Sartorius[4] | Example (Ex.) 1 | 0.2 | Regenerated cellulose (RC) membrane (crosslinked, (hydrophilic) | 123 | 73 | - | 0 | 1.6 | 0.7 | 3.1 |
| | Ex. 2 | 0.2 | | 129 | 61 | | | 1.5 | 0.7 | 3.9 |
| | Ex. 3 | 0.45 | | 116 | 36 | | | 1.0 | 1.1 | 6.0 |
| | Ex. 4 | 0.45 | | 118 | 32 | | | 0.9 | 1.0 | 6.8 |
| | Ex. 5 | 0.45 | | 222 | 19 | | | 0.9 | 2.3 | 21.8 |
| | Ex. 1a | 0.2 | Modified cellulose ester membrane (crosslinked, hydrophobic) | 136 | 85 | 3.1 | 114 | 1.6 | - | 3.0 |
| | Ex. 2a | 0.2 | | 135 | 77 | 3.1 | 122 | 1.5 | - | 3.3 |
| | Ex. 3a | 0.45 | | 127 | 38 | 2.4 | 123 | 1.1 | - | 6.3 |
| | Ex. 4a | 0.45 | | 135 | 36 | 2.2 | 124 | 1.0 | - | 6.9 |
| | Ex. 5a | 0.45 | | 248 | 22 | 2.7 | 123 | 1.0 | 1.5 | 23.8 |
| Sartorius[4] | Comparativ e Example (Comp. Ex.) 1 | 0.2 | Regenerated cellulose (RC) membrane (non-crosslinked, hydrophilic) | 88 | 55 | - | 0 | 1.7 | - | 3.0 |
| | Comp. Ex. 2 | 0.2 | | 107 | 41 | | | 1.4 | - | 4.9 |
| | Comp. Ex. 3 | 0.45 | | 160 | 32 | | | 0.9 | - | 9.3 |
| | Comp. Ex. 4 | 0.2 | | 109 | 34 | | | 1.1 | - | 6.0 |
| | Comp. Ex. 1a | 0.1 | Modified cellulose ester membrane (non-crosslinked, hydrophobic) | 87 | 162 | 5.8 | 119 | 2.1 | - | 1.0 |
| | Comp. Ex. 2a | 0.2 | | 104 | 77 | 3.3 | 116 | 1.4 | 0.5 | 2.5 |
| | Comp. Ex. 3a | 0.2 | | 171 | 54 | 3.4 | 114 | 1.3 | 0.7 | 5.9 |
| | Comp. Ex. 4a | 0.45 | | 103 | 34 | 2.5 | 127 | 1.0 | | 5.6 |
| Sumitomo[5] Competitor A | FP-010-60 | 0.1 | PTFE | 60 | 120 | 3.75 | 132 | 1.5 | 0.3 | 0.9 |
| | FP-022-60 | 0.22 | | 60 | 60 | 2.5 | - | 1.2 | 0.7 | 1.9 |
| | FP-045-80 | 0.45 | | 80 | 24 | 2 | | 0.8 | 1.4 | 6.2 |
| | FP-100-100 | 1 | | 100 | 8 | 1 | | 0.4 | 2.7 | 23.3 |
| | FP-500-100 | 5 | | 100 | 4 | 0.35 | | 0.15 | 5.1 | 46.6 |

(continued)

| Manufacturer | Product name | nominal pore size [$\mu$m] | Material | Thickness [$\mu$m] | IPA flow rate[1] | Water intrusion pressure [bar] | Water contact angle [°] | Bubble point IPA [bar] | Air Flow Rate[2] | Permeability [mD] |
|---|---|---|---|---|---|---|---|---|---|---|
| Gore Competitor B | SM0-00020 | 0.2 | PTFE | 50 | 66 | 5 | 138 | 2.1 | 0.47 | 1.4 |
| Sartorius[5] Competitor C | 15C77 | 0.2 | Modified PESU (Modification: PFAS) | 135 | - | 2.8 | - | ≥ 1[3] | 1.4 | - |
| | 15D07-MI | 0.2 | | | | 2.8 | | - | 1.4 | - |
| | 15D13 | 1.2 | | 160 | | 0.5 | | | 14 | - |
| | 15D02 | 3 | | | | 0.4 | | | 25 | - |
| | 15D42 | 5 | | | | 0.3 | | | 50 | - |
| Pall[5] Competitor D | Versapor 200RC | 0.2 | Acrylic Copolymer | 150 - 300 | - | 1.8 | - | - | 0.4 | - |
| | Versapor 450RC | 0.45 | | | | 1.1 | | | 1.5 | - |
| | Versapor 800RC | 0.8 | | | | 0.6 | | | 3.8 | - |
| | Versapor 1200RC | 1.2 | | | | 0.4 | | | 8.9 | - |
| | Versapor 3000RC | 3 | | | | 0.2 | | | 15.7 | - |
| | Versapor 5000RC | 5 | | | | 0.1 | | | 23.0 | - |

[1] IPA flow rate: [s/100mL@1 bar, 12.5 cm$^2$]

[2] Air Flow Rate: [L/(m$^2$·s) @ 200 Pa]

[3] IPA/$H_2O$ = 60/40

[4] (Comp.) Ex. 1 is the starting material of (Comp.) Ex. 1a etc. modified with carboxylic acid derivative

[5] Online manufacturer specification:

Gore - https://www.gore.com/system/files/2023-10/gore-microfiltration-media-dsh-us-sep-2023.pdf

Sumitomo - https://www.sei-sfp.co.jp/english/products/poreflon-membrane.html

Pall - https://parafix.com/wp-content/uploads/2020/02/Versapor-450RC-Membranes-datasheet-Parafix.pdf

Sartorius hydroph. PESU - https://www.sartorius.com/download/38342/broch-microoorous-pes-membranes-si-1535-e-data.pdf

Air flow rate has been determined in accordance with ISO 5636-1/-3 using Frank-PTI Modular Line Bendtsen. After inserting the sample and starting the test sequence, the test device lowers downwards. A rubber plate now presses the sample against a glass plate with a defined weight. A built-in vacuum pump lowers the pressure in the system by 50.7 kPa. The apparatus now records the time required until the pressure difference to the environment is exactly 48.0 kPa. The recorded time is given in Bekk seconds. For very smooth samples, the measuring volume can be changed via the software to 1/10 or even 1/20. This reduces the measuring time to 1/10 or 1/20. The above description has been taken from the manufacturer's website (frankpti.com) at "FRANK-PTI GmbH - ProductsModularLine Bendtsen".

**Claims**

1.  A method for producing a membrane, comprising the steps of:

    (a) providing a membrane comprising a crosslinked polysaccharide polymer, and
    (b) reacting hydroxyl groups of the polysaccharide polymer of the membrane with a carboxylic acid having 6 to 30 carbon atoms or a derivative thereof.

2.  The production method according to claim 1, wherein the polysaccharide polymer is selected from the group consisting of cellulose, agarose, starch as well as a mixture of at least two of said polysaccharide polymers.

3.  The production method according to claim 2, wherein the polysaccharide polymer is crosslinked cellulose.

4.  The production method according to claim 3, wherein the step (a) comprises the steps of (a1) providing a membrane comprising a cellulose ester, (a2) saponifying the cellulose ester membrane to provide a regenerated cellulose membrane, and (a3) crosslinking the regenerated cellulose membrane.

5.  The production method according to any one of claims 1 to 4, wherein the carboxylic acid derivate is selected from a carboxylic acid halide, a carboxylic acid anhydride, a carboxylic acid thioester, and an acyl phosphate.

6.  The production method according to any one of claims 1 to 5, wherein the membrane does not contain polyfluorinated polymers after the step (b).

7.  The production method according to any one of claims 1 to 6, wherein step (b) is carried out in the presence of a solvent selected from the group consisting of DMSO, butyl acetate, *N,N'*-dimethylformamide, *N*-methylpyrrolidinone, dichloromethane, acetone, acetonitrile, anisole, ethyl acetate, ethyl propionate, ethyl butyrate, propyl acetate, propyl propionate, propyl butyrate, diethyl ether, dioxane, nitromethane, tetrahydrofuran, triethylamine, *N,N*-diisopropylethylamine, dihydrolevoglucosenone (cyrene), and pyridine, as well as a mixture of at least two thereof.

8.  The production method according to claim 7, wherein the step (b) is carried out at reflux conditions.

9.  The production method according to any one of claims 1 to 8, wherein the step (b) is carried out in the presence of a base selected from the group consisting of pyridine, triethylamine, lithium diisopropylamide (LDA), sodium hydride, potassium hydride, sodium tert-butoxide, potassium tert-butoxide, lithium tetramethylpiperidide (LiTMP), sodium bis(trimethylsilyl)amide (NaHMDS), and potassium bis(trimethylsilyl)amide (KHMDS), as well as a mixture of at least two of said bases.

10. The production method according to any one of claims 1 to 9, wherein, after the step (b), an esterification degree with the carboxylic acid group is 0.17% to 70% in terms of 18.5 mmol -OH/1 g polysaccharide membrane (dry mass).

11. The production method according to any one of claims 1 to 10, wherein, after the step (b), the membrane has a water intrusion pressure of more than 2.0 bar and/or a bubble point of 0.30 to 2.6 bar and/or a permeability of at least 0.10 mDa, wherein the water intrusion pressure, the bubble point, and the permeability are determined as disclosed in the description.

12. A membrane obtained by the production method according to any of claims 1 to 11.

13. The membrane according to claim 12, wherein the membrane is an air filter membrane.

14. The membrane according to claim 12 or 13, wherein at least one membrane surface has a water contact angle of 90° or more and 180° or less as determined as disclosed in the description.

15. Use of the membrane according to any one of claims 12 to 14 for filtering a fluid medium.

a

b

Figure 1

a

b

Figure 2

| | A++ | Perfectly round droplet<br>Test passed |
| --- | --- | --- |
| | A | Round droplet with small bearing surface<br>Test passed |
| | B | Round droplet, possibly with a dark edge surrounding<br>Test passed |
| | C | Droplet is partly dispersed<br>Test not passed |
| | D | Droplet completely wets the surface<br>Test not passed |

Figure 3

Figure 4

**EUROPEAN SEARCH REPORT**

Application Number

EP 24 19 7267

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARNE QUELLMALZ ET AL: "Citric Acid Cross-Linked Nanocellulose-Based Paper for Size-Exclusion Nanofiltration", HHS AUTHOR MANUSCRIPTS, NIH- NATIONAL LIBRARY OF MEDICINE, US, vol. 1, no. 4, 13 April 2015 (2015-04-13), pages 271-276, XP009187416, DOI: 10.1021/AB500161X | 1-3,6, 10-15 | INV. B01D67/00 B01D71/14 |
| Y | * abstract; figure 1 * ----- | 4,5 | |
| X | CN 1 974 729 A (CHINA PETROCHEMICAL CORP [CN]) 6 June 2007 (2007-06-06) * Technical field; claims 1-2, 3, 6-7 * ----- | 12-15 | |
| Y | TOME L C ET AL: "Preparation and evaluation of the barrier properties of cellophane membranes modified with fatty acids", CARBOHYDRATE POLYMERS, APPLIED SCIENCE PUBLISHERS , LTD BARKING, GB, vol. 83, no. 2, 10 January 2011 (2011-01-10), pages 836-842, XP027488172, ISSN: 0144-8617, DOI: 10.1016/J.CARBPOL.2010.08.060 [retrieved on 2010-11-10] * abstract; table 1 * * paragraphs [02.4] - [02.5] * ----- | 1-15 | |

TECHNICAL FIELDS
SEARCHED     (IPC)

B01D

-/--

The present search report has been drawn up for all claims

| Place of search | Date of completion of the search | Examiner |
|---|---|---|
| Munich | 21 January 2025 | Veríssimo, Sónia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 24 19 7267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FREIRE C. S. ET AL: "Controlled heterogeneous modification of cellulose fibers with fatty acids: Effect of reaction conditions on the extent of esterification and fiber properties", JOURNAL OF APPLIED POLYMER SCIENCE, vol. 100, no. 2, 15 April 2006 (2006-04-15), pages 1093-1102, XP093241663, US ISSN: 0021-8995, DOI: 10.1002/app.23454 * paragraph [Cellulose_esterification] * | 1-15 | |
| Y | US 2016/177512 A1 (ASAHI KASEI FIBERS CORPORAITON) 23 June 2016 (2016-06-23) * paragraphs [0217], [0218], [0375]; claims 1,3 * | 1-15 | |
| Y,D | US 2020/230557 A1 (VAN DER KRUIJS SANDRA [DE] ET AL) 23 July 2020 (2020-07-23) * paragraph [0001]; claims 1,7 * | 1-15 | TECHNICAL FIELDS SEARCHED (IPC) |

The present search report has been drawn up for all claims

| Place of search | Date of completion of the search | Examiner |
|---|---|---|
| Munich | 21 January 2025 | Veríssimo, Sónia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                            

& : member of the same patent family, corresponding document

EPO FORM 1503 03.82 (P04C01)

EP 4 703 028 A1

## ANNEX TO THE EUROPEAN SEARCH REPORT
## ON EUROPEAN PATENT APPLICATION NO.

EP 24 19 7267

21-01-2025

| Patent document cited in search report | | | Publication date | Patent family member(s) | | | Publication date |
|---|---|---|---|---|---|---|---|
| CN 1974729 | A | | 06-06-2007 | NONE | | | |
| US 2016177512 | A1 | | 23-06-2016 | BR | 112016000940 | A2 | 25-07-2017 |
| | | | | CA | 2917792 | A1 | 22-01-2015 |
| | | | | CN | 105431587 | A | 23-03-2016 |
| | | | | CN | 110016833 | A | 16-07-2019 |
| | | | | EP | 3023542 | A1 | 25-05-2016 |
| | | | | JP | 6097394 | B2 | 15-03-2017 |
| | | | | JP | WO2015008868 | A1 | 02-03-2017 |
| | | | | KR | 20160020524 | A | 23-02-2016 |
| | | | | KR | 20180113639 | A | 16-10-2018 |
| | | | | US | 2016177512 | A1 | 23-06-2016 |
| | | | | US | 2019257032 | A1 | 22-08-2019 |
| | | | | WO | 2015008868 | A1 | 22-01-2015 |
| US 2020230557 | A1 | | 23-07-2020 | CN | 110234420 | A | 13-09-2019 |
| | | | | DE | 102017000919 | A1 | 02-08-2018 |
| | | | | EP | 3490695 | A1 | 05-06-2019 |
| | | | | JP | 6977046 | B2 | 08-12-2021 |
| | | | | JP | 2020506044 | A | 27-02-2020 |
| | | | | JP | 2021178325 | A | 18-11-2021 |
| | | | | US | 2020230557 | A1 | 23-07-2020 |
| | | | | WO | 2018141437 | A1 | 09-08-2018 |

## REFERENCES CITED IN THE DESCRIPTION

### Patent documents cited in the description

- WO 2018141437 A1
- US 7422686 B2

### Non-patent literature cited in the description

- **MARCEL MULDER**. Basic Principles of Membrane Technology, 89
- Characterization of porous membranes via porometry. **A. SHRESTHA**. Mechanical Engineering Graduate Theses & Dissertations. University of Colorado at Boulder, 2012, vol. 38
- *Journal of Membrane Science*, 2011, vol. 372, 66-74
- **F.-M. PANG et al.** *Journal of Molecular Liquids*, vol. 136 (1-2), 71-78